# EUROPÄISCHE PATENTSCHRIFT

(11) **EP 0 970 557 B1**
(45) Veröffentlichungstag und Bekanntmachung des Hinweises auf die Patenterteilung: **07.11.2001**
(21) Anmeldenummer: 98922602.2
(22) Anmeldetag: 13.03.1998
(51) Int. Cl.: H02K 5/24, H02K 1/18

(54) **Abstützelemente aufweisender Ständer einer elektrischen Maschine**
Stator of an electric machine provided with supporting elements
Stator d'une machine électrique muni d'éléments-supports

(30) Priorität: 27.03.1997 DE 19713077
(43) Veröffentlichungstag der Anmeldung: 12.01.2000
(73) Patentinhaber: SIEMENS AKTIENGESELLSCHAFT, 80333 München (DE)
(72) Erfinder: KAPPAUF, Horst, D-40789 Monheim (DE); SOMMER, Fritz, D-45481 Mülheim an der Ruhr (DE)
(86) Internationale Anmeldenummer: DE9800761
(87) Internationale Veröffentlichungsnummer: WO9844617

(56) Entgegenhaltungen:
- DE-A- 2 220 420
- FR-A- 2 249 467
- SOVIET INVENTIONS ILLUSTRATED Section EI, 26.Mai 1982 Derwent Publications Ltd., London, GB; Class X11, AN E3407-E15 XP002074965 & SU 843 101 A (ANEMPODISTOV V P) , 30.Juni 1981

## Beschreibung

Die Erfindung betrifft einen Ständer einer elektrischen Maschine, insbesondere den Ständer eines Turbogenerators.

Bei elektrischen Maschinen (Generatoren) zur Umwandlung mechanischer Energie in elektrische Energie oder umgekehrt rotiert während der Energieumwandlung eine Läuferwelle in einem meist annähernd rotationssymmetrischen Hohlraum des Ständers. Einige unterschiedliche Turbogeneratoren sind in einer Druckschrift der Kraftwerk Union AG, Mülheim/Ruhr, Bestell-Nr. K/10437-01 vom März 1982 (KWU-Druckschrift) beschrieben. Eine andere Druckschrift, in der Turbogeneratoren und Teile von Turbogeneratoren beschrieben werden, wurde von der Siemens AG, Bereich Energieerzeugung (KWU) Freyeslebenstr. 1, D-91058 Erlangen unter der Bestell-Nr. A96001-U111-A244 (Siemens-Druckschrift) im September 1993 herausgegeben. Aus beiden Druckschriften sind elektrische Wicklungen des Ständers bekannt, die an einem oder beiden axialen Enden sogenannte Wikkelköpfe aufweisen. Die Ständer-Wickelköpfe von wasserstoffgekühlten Turbogeneratoren können mit Hilfe eines massiven, vorzugsweise aus glasfaserverstärktem Kunststoff bestehenden und etwa rotationssymmetrischen Stützrings abgestützt werden. Der Stützring wiederum wird an einer Druckplatte abgestützt, mit der ein Blechplattenstapel des Ständers unter Stapeldruck gehalten wird. Der Blechplattenstapel dient zur Verstärkung des Magnetfeldes der Ständerwicklung. Die Stapelrichtung liegt dabei ungefähr parallel zur Rotationtsachse der Läuferwelle. Die Abstützung zwischen dem Stützring und der Druckplatte erfüllt unterschiedliche Aufgaben. Zum einen trägt sie in lotrechter Richtung das Eigengewicht des Stützringes und der von dem Stützring getragenen Teile, insbesondere des Wikkelkopfes. Zum anderen verhindert sie eine Verdrehung des Wickelkopfes während des Betriebes des Turbogenerators und beim Auftreten eines Störfalles. Außerdem erfüllt sie weitere Aufgaben, wie z.B. das Dämpfen von Schwingungen, die während des Betriebes des Turbogenerators auftreten, und das Ausgleichen von Abstandsänderungen und relativer Verschiebungen von Teilen des Ständers aufgrund thermisch bedingter Ausdehnungen und Kontraktionen.

Bekannt sind Abstützungen, die speziell zur Erfüllung bestimmter der bereits genannten Aufgaben ausgelegt sind, z.B. reibungsbehaftete Auflager speziell für die Aufnahme der Gewichtskraft des Stützrings und des Wickelkopfes. Die gesamte Abstützung besteht aus einer Vielzahl von Bauelementen unterschiedlicher Art. Die Vielzahl der Bauelemente erfordert einen Raum, der zu Lasten des Raumangebots für andere Teile geht, die im Bereich der Druckplatte und des Stützrings angeordnet sind. Außerdem erfordert das Zusammenwirken der einzelnen Bauelemente eine entsprechende Präzision bei ihrer Herstellung.

In der DE-AS 10 57 214 ist eine Einrichtung an Einphasenwechselstromgeneratoren großer Leistung zur federnden Drehmomentübertragung des Ständers auf das Maschinenfundament unter Einschaltung von zwischen dem Eisenkörper der Maschine und dem äußeren Gehäuse angeordneten Federgliedern angegeben. Die zweiseitig am Umfang des die Wicklung tragenden Eisenkörpers angreifenden Federglieder in Form von Federstützen oder Federsäulen sind an den konsolartig auf dem Fundament abgestützten Teilen des äußeren Maschinengehäuses so abgestützt, daß die übertretenden Schwingungskräfte an starr an dem Fundament abgestützten Gehäuseteilen abgefangen und auf das Fundament übertragen werden.

In der DE-AS 11 46 560 ist ein Gehäusemantel für elektrische Maschinen mit zwischen dem Gehäusemantel und dem Ständerblechpaket angeordneten, am Umfang des Blechpakets etwa gleichmäßig verteilten Längsrippen, die mit ihrem Querschnitt in eine von der radialen zur Längsachse des Gehäuses abweichenden Richtung gestellt sind, beschrieben. Hierbei weicht wenigstens ein Teil der mit wenigstens zwei Versteifungsringen versehenen Rippen abwechselnd nach der einen und der anderen Seite der Radialen von deren Richtung ab, wobei die Gesamtsumme der Mittelabweichungen von der Radialen nach der einen Seite hin etwa gleich der Gesamtsumme der Winkelabweichungen von der Radialen nach der anderen Seite hin ist.

In der DE-AS 12 20 022 ist eine elektrische Maschine mit zylindrischem Ständergehäuse beschrieben, bei der zur Dämpfung von Schwingungen an den Stirnseiten des Ständergehäuses Ringe angeordnet sind. Die Ringe haben hierbei eine größere Steifigkeit als das Ständergehäuse und sind durch an mehreren am Umfang verteilten Stellen angeordnete Verbindungsmittel derart mit dem Ständergehäuse verbunden, daß bei Relativbewegung zwischen den Ringen und den Stirnflächen des Ständergehäuses der Gehäuseschwingung entgegenwirkende Reibungskräfte erzeugt werden.

Die DE 37 07 422 A1 betrifft ein Verfahren zur Befestigung des Ständerpakets bei einem elektrischen Drehstromgenerator, bei dem am Außenumfang des Ständerpakets ein Spannring angeordnet ist, und dieser mindestens an vorgegebenen Stellen mit dem Ständerpaket fest verbunden ist. Weiterhin sind beidseitig an den Spannring Generatorgehäuseteile zur Anlage gebracht und miteinander verspannt. Der Spannring verfügt über Axialdurchlässe, vorzugsweise gebildet durch eine allgemeine Wellenform eines den Spannring bildenden Blechbandes, so daß durch verschiedene Anlagemöglichkeiten der beidseitigen Gehäuseringflächen der innere Kanalquerschnitt für die den Generator durchströmende Kühlluft verändert wird.

In der CH-PS 547 568 ist eine Halteeinrichtung für den Stator einer dynamoelektrischen Maschine beschrieben, welcher Stator zwischen einem Paar Endrahmen innerhalb eines nicht-tragenden Außenmantels angeordnet ist. Die Halteeinrichtung dient der Trennung von Statorvibrationen von anderen Teilen der dynamoelektrischen Maschine. Die Halteeinrichtung weist wenigstens ein Paar vertikaler Federplatten auf, die auf entgegengesetzten Seiten des Stators angeordnet sind, wobei das eine Ende jeder Federplatte am Stator und das andere Ende von jeder Federplatte an einem tragenden Fundament befestigt ist. Der nicht tragende Außenrahmen, der zwischen den Endrahmen um den Stator herum und ohne Kontakt mit den Federplatten und dem Stator angeordnet ist, ist so ausgebildet, daß Vibrationen des Stators direkt auf das Fundament und nicht auf den Außenrahmen übertragbar sind.

Die SU-A-843101 zeigt einen Stator eines Wasserkraftgenerators. Der Stator ist in einem Rahmen aufgehängt. Der Rahmen wird durch ringförmige, den Stator umgebende Bauteile gebildet, an denen der Stator über biegefähige Klammern befestigt ist.

Aufgabe der vorliegenden Erfindung ist es, eine Abstützung eines ersten Teils des Ständers einer elektrischen Turbomaschine, an einem zweiten Teil des Ständers anzugeben, bei der die Abstützung sowohl die Gewichtskraft der zu tragenden Teile aufnimmt, axiale und radiale Abstandsänderungen der beiden Teile erlaubt, als auch eine Verdrehung des Wickelkopfes weitestgehend verhindert und bei der die Bauelemente der Abstützung einen möglichst geringen Raumbedarf haben sowie möglichst kostengünstig herzustellen und zu montieren sind.

Die Aufgabe wird erfindungsgemäß durch einen Ständer mit den Merkmalen des Anspruchs 1 gelöst. Weiterbildungen sind Gegenstand der abhängigen Ansprüche.

Bei dem erfindungsgemäßen Ständer sind die beiden Teile des Ständers an mindestens drei Stellen jeweils mit einem einstückigen Abstützelement aneinander abgestützt. Die mindestens drei Verbindungsstellen sind um die Rotationsachse der Läuferwelle verteilt, um eine Verdrehung der beiden Teile relativ zueinander zu verhindern. Jedes Abstützelement weist zwischen seinen Enden jeweils einen monoplanar gebogenen Materialstreifen auf. Der Ständer ist derart, daß der Abstand der beiden Teile, unter Biegungsverformung der Materialstreifen, in axialer und radialer Richtung der Turbomaschine veränderbar ist und daß die Abstützung, aufgrund der Steifigkeit der Materialstreifen quer zum Biegungsverlauf, in tangentialer Richtung starr ist. Unter einer axialen Richtung wird eine Richtung parallel zur Rotationsachse des Läufers (Generatorwelle, Läuferwelle) der Turbomaschine verstanden. Dementsprechend schneidet jede, gedachte, Linie in radialer Richtung die Rotationsachse unter einem rechten Winkel. Zu jedem Bezugspunkt im Bereich des Ständers der Turbomaschine existiert genau eine tangentiale Richtung, die durch die Tangente am Bezugspunkt an eine durch den Bezugspunkt gehende Kreislinie definiert ist, die rotationssymmetrisch zur Rotationsachse des Ständers ist. Unter einem monoplanar gebogenen Materialstreifen wird hier ein Materialstreifen verstanden, dessen Form durch Verbiegen eines ebenen biegbaren Materialstreifens erzielt werden kann, wobei der Materialstreifen ausschließlich um gedachte oder tatsächlich vorhandene Achsen herumgebogen wird, die alle parallel zu einer in der Ebene des ungebogenen Materialstreifens liegenden Bezugsrichtung sind, und wobei die Bezugsrichtung in dem Materialstreifen ortsfest ist. Folglich erstreckt sich der Materialstreifen nach dem Biegen in der Bezugsrichtung und in Richtungen parallel zu der Bezugsrichtung entlang gerader Linien. Bei diesem Verfahren handelt es sich lediglich um ein Beispiel zur Veranschaulichung der Form. Die tatsächlich bei der erfindungsgemäßen Anordnung verwendeten Materialstreifen können nach anderen Verfahren hergestellt werden.

Die Abstützung der verschiedenen Teile aneinander ist frei von Reibung. Ein oder mehrere einstückige Abstützelemente gemäß der Erfindung können beispielsweise die Funktion der aus dem Stand der Technik bekannten reibungsbehafteten Auflager zur Aufnahme der Gewichtskraft des Stützrings und des Wickelkopfes übernehmen. Insbesondere Abstützelemente, die ungefähr in Höhe der Rotationsachse der Läuferwelle angeordnet sind, können die Gewichtskraft ohne wesentliche Biegungsverformung aufnehmen, da die oben genannte Bezugsrichtung quer zum Biegungsverlauf ungefähr senkrecht nach unten verläuft. Gleichzeitig können diese Abstützelemente, wie auch die anderen Abstützelemente eines erfindungsgemäßen Ständers, eine Verdrehung des Wickelkopfes weitestgehend verhindern. Insbesondere bei plötzlicher Beschleunigung oder Verlangsamung der Rotationsbewegung der Läuferwelle können große in tangentialer Richtung wirkende Kräfte auftreten, die ohne eine geeignete Abstützanordnung zu einer unzulässigen Verdrehung des Wickelkopfes führen. Ein wesentlicher Vorteil der Erfindung besteht also darin, daß ein Reibungsverschleiß an Bauteilen der Abstützung und der Ständerwicklungs-Isolierung vermieden wird.

Ein Abstützelement mit einem gebogenen Materialstreifen ist einfach und kostengünstig herstellbar. Dadurch daß der Materialstreifen gebogen ist, hat er einen geringen Platzbedarf. Vorzugsweise werden bei der Erfindung an allen einzelnen Abstützstellen die gleichen Abstützelemente verwendet. Dies ist aufgrund der mechanischen Eigenschaften des gebogenen Materialstreifens möglich. Auf in axialer und radialer Richtung angreifende Kräfte reagiert der Materialstreifen durch, vorzugsweise elastische, Biegungsverformung. Dabei ist er dazu in der Lage, zeitlich konstanten Kräften, z. B. Gewichtskräften eines Wickelkopfes, entsprechenden Widerstand entgegen zu setzen und gleichzeitig auf zeitlich veränderliche Kräfte, z. B. durch thermisch bedingte Lageänderungen der beiden aneinander abzustützenden Teile oder durch Schwingungen, flexibel zu reagieren. Aufgrund der Verformbarkeit des Materialstreifens werden insbesondere unerwünschte Zwängungen, z. B. mit dem Ergebnis des Herauswanderns von Kupfer-Evolventen aus einem Wickelkopf, vermieden. Tangential angreifende Kräfte, insbesondere durch elektromagnetische Wechselwirkung zwischen Läufer und Ständer, überträgt er aufgrund seiner Steifigkeit nahezu unverändert von einem zum anderen Ende, so daß er eine unerwünschte relative Drehbewegung der beiden aneinander abzustützenden Teile verhindert.

Bei einer Weiterbildung des erfindungsgemäßen Ständers verlaufen die Materialstreifen in Längsaxialschnitten der Turbomaschine serpentinenartig gebogen und erstrecken sich, senkrecht zu den Schnittebenen, geradlinig ungefähr in tangentialer Richtung. Unter einem Längsaxialschnitt wird ein ebener Schnitt bezeichnet, wobei die Rotationsachse des Läufers der Turbomaschine in der Schnittebene liegt. Bevorzugt wird eine Weiterbildung, bei der die Materialstreifen in Längsaxialschnitten der Turbomaschine jeweils entlang einer Linie verlaufen, die an den Enden jeweils ungefähr einen Viertelkreis beschreibt, der in ein gerades Linienstück übergeht, und wobei die geraden Linienstücke durch das Serpentinenstück miteinander verbunden sind. Entsprechend den geforderten mechanischen Eigenschaften, insbesondere den Steifigkeiten des Materialstreifens gibt es auch Ausgestaltungen, die mäanderartig mehrere Serpentinenstücke aufweisen. Außer durch Formgebung solcher Art können über die Länge des Materialstreifens, die Materialwahl und über die Dicke des Materialstreifens seine mechanischen Eigenschaften eingestellt werden.

Bei einer weiteren Weiterbildung ist das erste Teil, das an dem zweiten Teil abgestützt wird, eine Druckplatte, mit der ein Blechplattenstapel mit einer Stapelrichtung ungefähr parallel zur Rotationsachse der Läuferwelle unter Stapeldruck haltbar ist. Bei noch einer Weiterbildung ist das zweite Teil ein Stützring, vorzugsweise aus glasfaserverstärktem Kunststoff (GFK), der eine elektrische Wicklung des Ständers zumindest in einem Bereich der elektrischen Anschlüsse der Wicklung abstützt und/oder trägt.

Bei einer vorteilhaften Weiterbildung des Ständers ist mindestens einer der Materialstreifen an seinem einen Ende mit einem ersten und an seinem anderen Ende mit einem zweiten Verbindungselement verbunden, die jeweils fest mit einem der Teile verbunden sind. Günstigerweise sind die beiden Verbindungselemente und der Materialstreifen aus Metall gefertigt und sind die beiden Verbindungselemente mit dem Materialstreifen verschweißt. Bevorzugt wird, daß das Schweißen vor der Montage des Abstützelements erfolgt und daß die Schweißnähte Stumpfnähte sind, die zur Erhöhung der Ermüdungsfestigkeit geschliffen worden sind.

Bei einer vorteilhaften Weiterbildung des Ständers besteht das erste Teil zumindest an der Verbindungsstelle zu dem mindestens einen Abstützelement mit den Verbindungselementen aus Metall und ist mit dem ersten Verbindungselement verschweißt. Die Dicke des ersten Verbindungselements ist, vorzugsweise etwa um 50 %, größer als die Dicke des Materialstreifens. Diese Ausgestaltung erleichtert das Anschweißen des Abstützelements an dem ersten Teil. Bei einer weiteren vorteilhaften Weiterbildung der Abstützanordnung ist das zweite Verbindungselement durch eine Mehrzahl von Schrauben, vorzugsweise durch Dehnschrauben, mit dem zweiten Teil verbunden, wobei die Schrauben sich jeweils ungefähr, mit ihrem Kopf außen, in radialer Richtung erstrecken. Das zweite Verbindungselement wird vorzugsweise wesentlich dicker ausgeführt als der Materialstreifen, um das zweite Verbindungselement fest verschrauben zu können, ohne den Materialstreifen zu verspannen. Für große Turbomaschinen, insbesondere für Turbogeneratoren mit Nennleistungen über 100 MW ist eine Dicke des zweiten Verbindungselements von 30 bis 45 mm zweckmäßig, vorzugsweise eine Dicke von ca. 40 mm. Der Materialstreifen weist für solche Turbomaschinen eine Dicke von 10 - 15 mm, vorzugsweise ca. 13 mm, und eine konstante Breite von 200 - 400 mm, vorzugsweise von ca. 300 mm auf.

Bei noch einer vorteilhaften Weiterbildung weist das zweite Teil zumindest eine Bohrung auf, die ungefähr parallel zur Rotationsachse der Läuferwelle verläuft, und ist in der zumindest einen Bohrung eine Verschraubungsbuchse angeordnet, die mit dem zweiten Verbindungselement verschraubt ist. Die Verschraubungsbuchse weist vorzugsweise zwei Bohrungen mit Innengewinde auf und besteht aus Stahl. Bei dieser Ausgestaltung der erfindungsgemäßen Abstützanordnung kann bei der Montage leicht und zuverlässig eine Schraubbefestigung des zweiten Verbindungselements an dem zweiten Teil erreicht werden, bei einem gleichmäßigen Anpreßdruck.

Ein Vorteil der Ausgestaltungen mit einer Schraubbefestigung des zweiten Verbindungselementes an dem zweiten Teil ist, daß Herstellungstoleranzen bei der Herstellung der beiden Teile, die mit dem Abstützelement aneinander abgestützt sind, und/oder bei der Herstellung des Abstützelements auf einfache Weise ausgeglichen werden können. Zum Ausgleich der Toleranzen werden zum einen Futterbleche, die zwischen dem zweiten Verbindungselement und dem zweiten Teil angeordnet werden, verwendet und zum anderen die Löcher in dem zweiten Verbindungselement zur Aufnahme von Schrauben als Langlöcher ausgeführt.

Bei einer Ausgestaltung sind die beiden Teile so gegeneinander abgestützt, daß die Verbindungsstellen der beiden Teile zu den Abstützelementen jeweils etwa auf einer Kreislinie mit Mittelpunkt ungefähr auf der Rotationsachse der Läuferwelle liegen.

Bei einer weiteren Ausgestaltung sind die Verbindungsstellen jeweils etwa gleichmäßig um die Rotationsachse der Läuferwelle verteilt, d. h. ihre Verbindungslinien zu einem Punkt auf der Rotationsachse schließen etwa gleich große Winkel zwischeneinander ein.

Der Materialstreifen des Abstützelements kann beispielsweise ein Blechstreifen sein und durch Biegen um eine Achse oder durch Biegen um mehrere zueinander parallele Achsen geformt werden. Es können die üblichen Blechbiegewerkzeuge verwendet werden.

Ausführungsformen des erfindungsgemäßen Ständers werden anhand der Zeichnung beschrieben. Diese Ausführungsformen sind Beispiele, auf die die Erfindung nicht beschränkt ist. Die einzelnen Figuren der Zeichnung zeigen:
- FIG. 1: eine Abstützanordnung in einem Längsaxialschnitt,
- FIG. 2: eine Abstützanordnung in einem Querschnitt senkrecht zur Rotationsachse,
- FIG. 3: ein Abstützelement in radialer Blickrichtung,
- Fig. 4: eine Verschraubungsbuchse im Längsschnitt und
- Fig. 5: die Verschraubungsbuchse im Querschnitt.

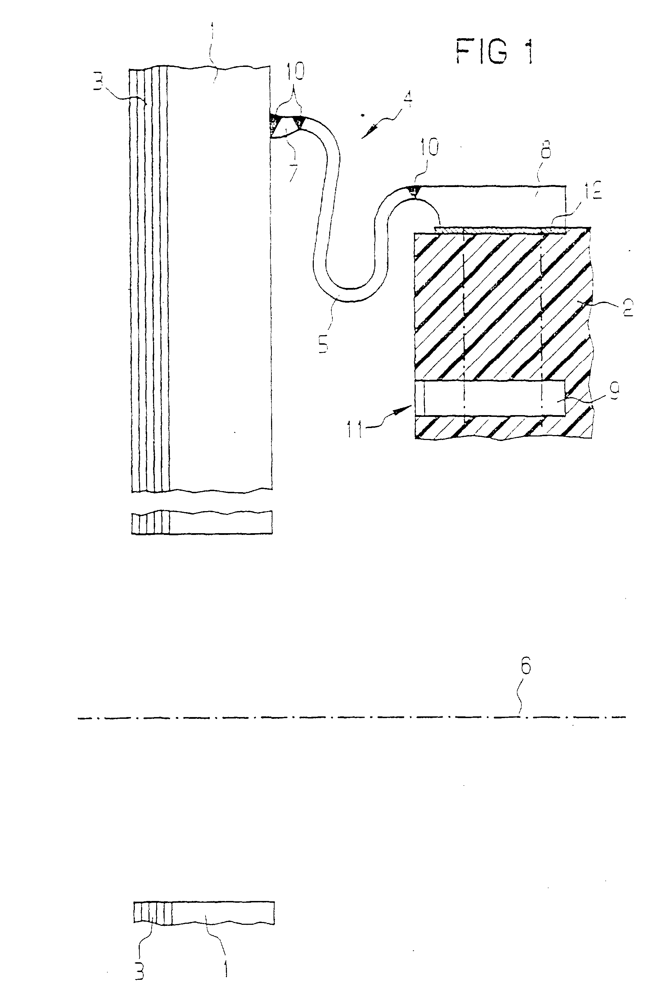

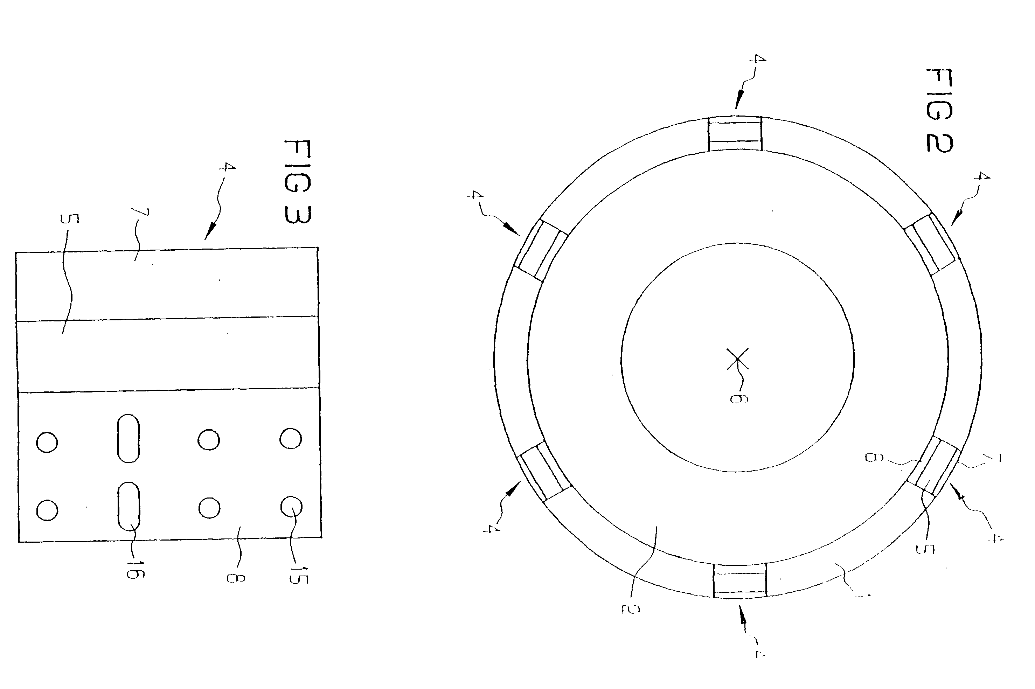

Figur 1 zeigt eine Abstützanordnung in einem Längsaxialschnitt, d.h. mit einer Schnittebene, in der die Rotationsachse 6 der Läuferwelle liegt. Die Druckplatte 1 (das erste Teil des Ständers) und der Stützring 2 (das zweite Teil des Ständers) aus glasfaserverstärktem Kunststoff (GFK-Ring) werden durch das Abstützelement 4 gegeneinander abgestützt. Die Druckplatte 1 hält den Blechplattenstapel 3, dargestellt am linken Bildrand, unter Stapeldruck. Das Gegenlager des Blechplattenstapels, z.B. eine zweite Druckplatte ist nicht dargestellt. Das Abstützelement 4 weist einen Blechstreifen 5 auf, der an seinen Enden über Schweißnähte 10 mit einem ersten Verbindungselement 7 bzw. mit einem zweiten Verbindungselement 8 verbunden ist. Das erste Verbindungselement 7 ist über eine weitere Schweißnaht 10 mit der Druckplatte 1 verbunden. Die Schweißnähte 10 sind als Stumpfnähte ausgeführt. Über das zweite Verbindungselement 8 ist das Abstützelement 4 mit dem GFK-Ring 2 verbunden. Die Verbindung ist als Verschraubung ausgeführt. Die in Figur 1 nicht dargestellten Schrauben erstrecken sich von dem zweiten Verbindungselement 8 durch die Futterplatte 12, die dem Ausgleich von Herstellungstoleranzen dient, weiter durch Bohrungen in dem GFK-Ring 2 bis zu der Verschraubungsbuchse 9, die Bohrungen mit Innengewinde aufweist. Die Verschraubungsbuchse 9 ist in einer Bohrung 11 angeordnet. In Richtung auf die Rotationsachse 6 zu ist die Druckplatte 1 unterbrochen dargestellt. Unten in der Figur 1 ist ein weiterer Teil der rotationssymmetrisch ausgeführten einstückigen Druckplatte 1 zu sehen, sowie ein Stück des Blechplattenstapels 3.

Mit der Futterplatte 12 kann ein Toleranzausgleich in radialer Richtung für jeweils ein Abstützelement 4 an einer einzigen Stelle bewirkt werden. Ein solcher Toleranzausgleich kann beispielsweise erforderlich sein aufgrund der mechanischen Bearbeitung des GFK-Rings 2, aufgrund von Fertigungstoleranzen bei der Herstellung des Abstützelements 4 und aufgrund von Toleranzen bei der Anschweißung des Abstützelements 4 an der Druckplatte 1.

In der in Figur 1 gezeigten Schnittebene verläuft das Abstützelement 4, beginnend an der Druckplatte 1 zunächst etwa senkrecht zur Oberfläche der Druckplatte 1, beschreibt dann ungefähr einen Viertelkreis nach rechts, geht in ein gerades Stück über, an das sich ein Serpentinenstück anschließt, das wiederum in ein kürzeres gerades Stück übergeht und, einen Viertelkreis nach rechts beschreibend, sich zu dem zweiten Verbindungselement 8. erweitert. Ist das Abstützelement 4 beispielsweise für den Einsatz in Turbogeneratoren der Firma Siemens AG, Baureihe THDF (beschrieben in der KWU-Druckschrift und in der Siemens-Druckschrift) ausgelegt, dann weist der Blechstreifen 5 z.B. eine Dicke von 5 bis 15 mm auf. Das zweite Verbindungselement weist in diesem Fall eine Dicke von ca. 40 mm auf. Bei dieser Dimensionierung ist das Abstützelement 4 dazu in der Lage, in radialer Richtung Kräfte von 5 kN bis 20 kN aufzunehmen. In tangentialer Richtung sind über das in dieser Richtung starre Abstützelement 4 Kräfte von 10 kN bis 100 kN übertragbar.

In Figur 2 ist eine Abstützanordnung in einem Querschnitt senkrecht zur Rotationsachse 6 der Läuferwelle durch den GFK-Ring 2 dargestellt. Insgesamt sechs Abstützelemente 4 verbinden die Druckplatte 1 mit dem CFK-Ring 2. Das erste Verbindungselement 7 des Abstützelements 4 ist an der Druckplatte 1 angeschweißt. Das zweite Verbindungselement 8 ist mit dem GFK-Ring 2 verschraubt. Die Abstützelemente 4 weisen gleich große Winkelabstände zueinander auf und sind in jeweils gleich großem Abstand zur Rotationsachse 6 angeordnet. Auch bei anderen Ausführungsformen werden vorzugsweise sechs bis zehn baugleiche Abstützelemente verwendet.

Figur 3 zeigt ein Abstützelement 4 in einer Blickrichtung, deren Verlängerung die Rotationsachse der Läuferwelle unter einem rechten Winkel kreuzt. An seinem zweiten Verbindungselement 8 weist das Abstützelement 4 insgesamt acht Löcher 15; 16 für die Verschraubung des Abstützelementes 4 auf. Die Löcher können als Löcher 15 mit kreisrundem Querschnitt oder als Langlöcher 16 mit ovalem Querschnitt ausgeführt sein. Langlöcher 16 erlauben den Ausgleich von Toleranzen bei der Herstellung des Abstützelementes 4 oder bei der Herstellung der abzustützenden Teile.

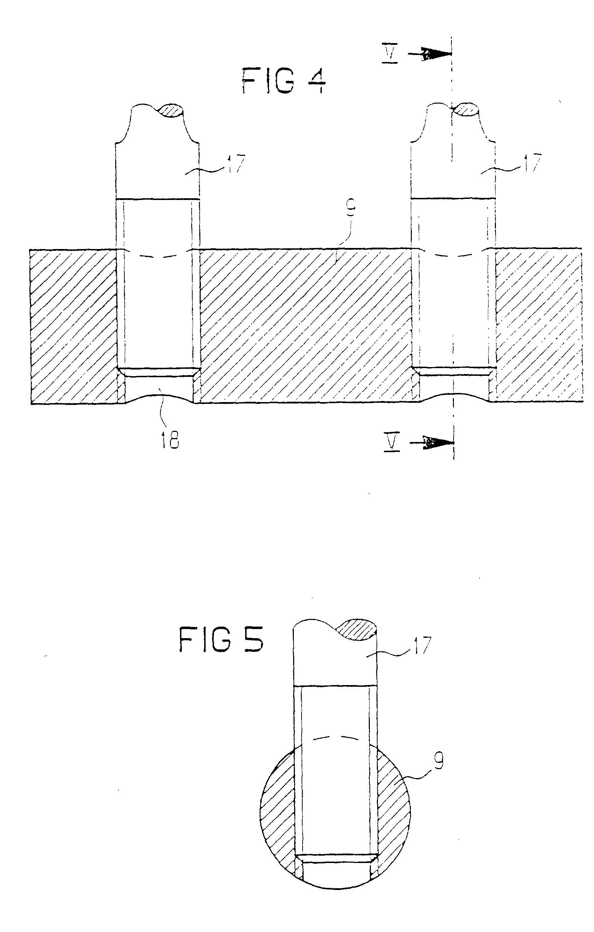

Figur 4 zeigt einen Längsschnitt durch eine Verschraubungsbuchse 9 mit zwei Löchern 18 mit Innengewinde und mit in die Löcher 18 eingeschraubten Dehnschrauben 17. Ein Querschnitt entlang der Linie V-V in Figur 4 ist in Figur 5 dargestellt. Man erkennt den kreisrunden Querschnitt der Verschraubungsbuchse 9. Die Verschraubungsbuchse 9 kann beispielsweise wie in Figur 1 gezeigt in einer Bohrung 11 angeordnet sein.

Für die Verschraubung des in Figur 3 dargestellten Abstützelementes 4 werden insgesamt vier der in Figur 4 und Figur 5 gezeigten Verschraubungsbuchsen benötigt. Weitere Ausführungsformen des erfindungsgemäßen Abstützelementes weisen Löcher 15; 16 für Verschraubungen in zwei parallelen Reihen mit je drei und je fünf Löchern 15; 16 auf. Bevorzugt werden für die Verschraubung Dehnschrauben M20 bis M30 verwendet.

Abstützelemente für den erfindungsgemäßen Ständers zur Abstützung können in wenigen Arbeitsschritten hergestellt werden. Der Umfang an mechanischer Bearbeitung ist klein. Für den Einbau der Abstützelemente können bewährte Techniken eingesetzt werden. Der Montageaufwand ist dabei kleiner als bei bisher bekannten Abstützelementen. Die Erfindung birgt daher ein hohes Potential für Rationalisierungen.

## Patentansprüche

1. Ständer einer elektrischen Turbomaschine, insbesondere eines Turbogenerators, mit einem ersten Teil (1) und einem zweiten Teil (2), wobei das erste Teil (1) und das zweite (2) Teil voneinander beabstandet sind und die beiden Teile (1, 2) die Rotationsachse (6) der Läuferwelle der Turbomaschine zumindest teilweise in Rotationsrichtung umgeben und wobei die beiden Teile (1, 2) an mindestens drei um die Rotationsachse (6) verteilten Stellen jeweils mit einem einstückigen Abstützelement (4) aneinander abgestützt sind, **dadurch gekennzeichnet, daß** die Abstützelemente (4) zwischen ihren Enden jeweils einen monoplanar gebogenen Materialstreifen (5) aufweisen, so daß der Abstand der beiden Teile (1; 2) unter Biegungsverformung der Materialstreifen (5) in axialer und radialer Richtung der Turbomaschine veränderbar ist und die Abstützung aufgrund der Steifigkeit der Materialstreifen (5) quer zum Biegungsverlauf in tangentialer Richtung starr ist.

2. Ständer nach Anspruch 1, wobei der Materialstreifen (5) entlang des Biegungsverlaufs elastisch biegeweich ist, so daß der Abstand der beiden Teile (1; 2) unter elastischer Biegungsverformung des Materialstreifens (5) in axialer und radialer Richtung veränderbar ist.

3. Ständer nach Anspruch 1 oder 2, wobei die Materialstreifen (5) in Längsaxialschnitten der Turbomaschine serpentinenartig gebogen verlaufen und wobei sie sich, senkrecht zu den Schnittebenen, geradlinig ungefähr in tangentialer Richtung erstrecken.

4. Ständer nach Anspruch 3, wobei die Materialstreifen (5) in Längsaxialschnitten der Turbomaschine jeweils entlang einer Linie verlaufen, die an den Enden jeweils ungefähr einen Viertelkreis beschreibt, der in ein gerades Linienstück übergeht, und wobei die geraden Linienstücke durch das Serpentinenstück miteinander verbunden sind.

5. Ständer nach einem der Ansprüche 1 bis 4, wobei das erste Teil (1) eine Druckplatte ist, mit der ein Blechplattenstapel (3) mit einer Stapelrichtung ungefähr parallel zur Rotationsachse (6) der Läuferwelle der Turbomaschine unter Stapeldruck haltbar ist.

6. Ständer nach einem der Ansprüche 1 bis 5, wobei das zweite Teil (2) ein Stützring, vorzugsweise aus glasfaserverstärktem Kunststoff, ist, der eine elektrische Wicklung des Ständers zumindest in einem Bereich ihrer elektrischen Anschlüsse abstützt und/oder trägt.

7. Ständer nach einem der Ansprüche 1 bis 6, wobei der Materialstreifen (5) mindestens eines Abstützelements (4) an seinem einen Ende mit einem ersten (7) und an seinem anderen Ende mit einem zweiten (8) Verbindungselement verbunden sind, die jeweils fest mit einem der aneinander abzustützenden Teile (1; 2) verbunden sind.

8. Ständer nach Anspruch 7, wobei die beiden Verbindungselemente (7; 8) und der Materialstreifen (5) aus Metall gefertigt sind und wobei die beiden Verbindungselemente (7; 8) mit dem Materialstreifen (5) verschweißt sind.

9. Ständer nach Anspruch 8, wobei das erste Teil (1) zumindest an der Verbindungsstelle zu dem mindestens einen Abstützelement (4) aus Metall besteht, wobei das erste Verbindungselement (7) mit dem ersten Teil (1) verschweißt ist, und wobei die Dicke des Verbindungselements (7), vorzugsweise um etwa 50 %, größer ist als die Dicke des Materialstreifens (5).

10. Ständer nach einem der Ansprüche 7 bis 9, wobei das zweite Verbindungselement (8) durch eine Mehrzahl von Schrauben (17) mit dem zweiten Teil (2) verbunden ist, wobei die Schrauben (17) sich jeweils ungefähr, mit ihrem Kopf außen, in radialer Richtung erstrecken.

11. Ständer nach Anspruch 10, wobei das zweite Teil (2) zumindest eine Bohrung (11), die ungefähr parallel zur Rotationsachse (6) der Läuferwelle verläuft, aufweist und wobei in der Bohrung (11) eine Verschraubungsbuchse (9) angeordnet ist, die mit dem zweiten Verbindungselement (8) verschraubt ist.

12. Ständer nach einem der Ansprüche 1 bis 11, wobei die Verbindungsstellen der beiden Teile (1; 2) zu den Abstützelementen (4) jeweils etwa auf einer Kreislinie mit Mittelpunkt ungefähr auf der Rotationsachse (6) der Läuferwelle liegen.

13. Ständer nach einem der Ansprüche 1 bis 12, wobei die Verbindungsstellen der beiden Teile (1; 2) zu den Abstützelementen (4) jeweils etwa gleichmäßig um die Rotationsachse (6) der Läuferwelle verteilt sind.

## Claims

1. Stator of an electrical turbomachine, in particular a turbogenerator having a first part (1) and a second part (2), with the first part (1) and the second part (2) being spaced apart from one another and the two parts (1, 2) at least partially surrounding the rotation axis (6) of the rotor shaft of the turbomachine in the rotation direction, and with the two parts (1, 2) each being supported by means of an integral supporting element (4) on one another at at least three points distributed around the rotation axis (6), **characterized in that** the supporting elements (4) each have a monoplanar curved material strip (5) between their ends, so that the distance between the two parts (1; 2) can be varied by bending deformation of the material strips (5) in the axial and radial directions of the turbomachine, and the support is rigid in the tangential direction, owing to the stiffness of the material strips (5) transversely with respect to the bending profile.

2. Stator according to Claim 1, in which the material strip (5) bends softly and elastically along the bending profile, so that the distance between the two parts (1; 2) can be varied by elastic bending deformation of the material strip (5) in the axial and radial directions.

3. Stator according to Claim 1 or 2, in which the material strips (5) run such that they are curved in a serpentine shape in longitudinal axial sections of the turbomachine, and in which they extend in a straight line approximately in the tangential direction at right angles to the section planes.

4. Stator according to Claim 3, in which the material strips (5) each run in longitudinal axial sections of the turbomachine along a line which in each case describes approximately a quarter circle at the ends and the quarter circle merges into a straight line section, and in which the straight line sections are connected to one another by means of the serpentine section.

5. Stator according to one of Claims 1 to 4, in which the first part (1) is a pressure plate by means of which a laminated plate stack (3) can be held by stack pressure with a stacking direction approximately parallel to the rotation axis (6) of the rotor shaft of the turbomachine.

6. Stator according to one of Claims 1 to 5, in which the second part (2) is a supporting ring, preferably composed of glass-fibre-reinforced plastic, which supports and/or is fitted with an electrical winding of the stator, at least in a region of its electrical connections.

7. Stator according to one of Claims 1 to 6, in which the material strip (5) of at least one supporting element (4) is connected at one of its ends to a first (7) connecting element, and is connected at its other end to a second (8) connecting element, and these connecting elements are each permanently connected to one of the parts (1; 2) which can be supported on one another.

8. Stator according to Claim 7, in which the two connecting elements (7; 8) and the material strip (5) are manufactured from metal, and in which the two connecting elements (7; 8) are welded to the material strip (5).

9. Stator according to Claim 8, in which the first part (1) is composed of metal, at least at the connecting point of the at least one supporting element (4), in which the first connecting element (7) is welded into the first part (1), and in which the thickness of the connecting element (7) is greater, preferably by approximately 50%, than the thickness of the material strip (5).

10. Stator according to one of Claims 7 to 9, in which the second connecting element (8) is connected by a number of screws (17) to the second part (2), and in which the screws (17) each extend approximately in the radial direction, with their heads on the outside.

11. Stator according to Claim 10, in which the second part (2) has at least one hole (11) which runs approximately parallel to the rotation axis (6) of the rotor shaft, and in which a screw-connection bush (9) is arranged in the hole (11) and is screwed to the second connecting element (8).

12. Stator according to one of Claims 1 to 11, in which the connecting points of the two parts (1; 2) for the supporting elements (4) each lie approximately on a circular line whose centre point is located approximately in the rotation axis (6) of the rotor shaft.

13. Stator according to one of Claims 1 to 12, in which the connecting points of the two parts (1; 2) for the supporting elements (4) are each distributed approximately uniformly around the rotation axis (6) of the rotor shaft.

## Revendications

1. Stator d'une turbomachine électrique, notamment d'un turboalternateur, comportant une première partie (1) et une deuxième partie (2), la première partie (1) et la deuxième partie (2) étant mutuellement distantes et les deux parties (1, 2) entourant au moins partiellement dans la direction de rotation l'axe (6) de rotation de l'arbre de rotor de la turbomachine, et les deux parties (1, 2) se soutenant mutuellement, en au moins trois endroits répartis autour de l'axe (6) de rotation, par un élément (4) de soutien respectif d'un seul tenant, **caractérisé en ce que** les éléments (4) de soutien comprennent entre leurs extrémités une bande (5) respective de matériau recourbée dans un seul plan, de sorte que la distance, dans la direction axiale et dans la direction radiale de la turbomachine, entre les deux parties (1, 2) peut être modifiée par déformation en flexion de la bande (5) de matériau, et que le soutien est rigide en direction tangentielle du fait de la rigidité de la bande (5) de matériau transversalement à la courbe de flexion.

2. Stator suivant la revendication 1, dans lequel la bande (5) de matériau est élastique en flexion le long de la courbe de flexion, de sorte que la distance en direction axiale et en direction radiale entre les deux parties (1, 2) peut être modifiée par déformation élastique en flexion de la bande (5) de matériau.

3. Stator suivant la revendication 1 ou 2, dans lequel les bandes (5) de matériau s'étendent, dans des coupes longitudinales axiales de la turbomachine, en étant recourbées en serpentin et elles s'étendent, perpendiculairement aux plans de coupe, environ en ligne droite en direction tangentielle.

4. Stator suivant la revendication 3, dans lequel les bandes (5) de matériau s'étendent, dans des coupes longitudinales axiales de la turbomachine, le long d'une ligne respective qui décrit à chacune des extrémités un quart de cercle approximatif qui se poursuit par un tronçon de ligne rectiligne, et les tronçons de ligne rectilignes sont mutuellement reliés par le tronçon en serpentin.

5. Stator suivant l'une des revendications 1 à 4, dans lequel la première partie (1) est un plateau de pression permettant de maintenir sous pression d'empilage une pile (3) de plaques de tôle dont la direction d'empilage est approximativement parallèle à l'axe (6) de rotation de l'arbre de rotor de la turbomachine.

6. Stator suivant l'une des revendications 1 à 5, dans lequel la deuxième partie (2) est une bague de soutien, de préférence en matière plastique renforçée par de la fibre de verre, qui soutient et/ou porte un bobinage électrique du stator au moins dans une région de ses bornes électriques.

7. Stator suivant l'une des revendications 1 à 6, dans lequel la bande (5) de matériau d'au moins un élément (4) de soutien est assemblée à une de ses extrémités à un premier élément (7) de liaison et à son autre extrémité à un deuxième élément (8) de liaison, qui sont chacun fixement assemblés à une des parties (1, 2) se soutenant mutuellement.

8. Stator suivant la revendication 7, dans lequel les deux éléments (7, 8) de liaison et la bande (5) de matériau sont fabriqués en métal, et les deux éléments (7, 8) de liaison sont soudés à la bande (5) de matériau.

9. Stator suivant la revendication 8, dans lequel la première partie (1) est constituée de métal au moins au point d'assemblage avec ledit au moins un élément (4) de soutien, le premier élément (7) de liaison est soudé à la première partie (1), et l'épaisseur de l'élément (7) de liaison est supérieure, de préférence d'environ 50%, à l'épaisseur de la bande (5) de matériau.

10. Stator suivant l'une des revendications 7 à 9, dans lequel le deuxième élément (8) de liaison est assemblé à la deuxième partie (2) par une pluralité de vis (17), les vis (17) s'étendant respectivement à-peu-près en direction radiale, avec leur tête à l'extérieur.

11. Stator suivant la revendication 10, dans lequel la deuxième partie (2) possède au moins un perçage (11) qui s'étend environ parallèlement à l'axe (6) de rotation de l'arbre de rotor, et une douille (9) de vissage, qui est assemblée par vissage au deuxième élément (8) de liaison, est disposée dans le perçage (11).

12. Stator suivant l'une des revendications 1 à 11, dans lequel les points d'assemblage des deux parties (1, 2) aux éléments (4) de soutien se situent respectivement environ sur une ligne circulaire dont le centre se trouve environ sur l'axe (6) de rotation de l'arbre de rotor.

13. Stator suivant l'une des revendications 1 à 12, dans lequel les points d'assemblage des deux parties (1, 2) aux éléments (4) de soutien sont respectivement environ uniformément répartis autour de l'axe (6) de rotation de l'arbre de rotor.
